# EUROPEAN PATENT SPECIFICATION

(11) **EP 4 312 576 B1**
(45) Date of publication and mention of the grant of the patent: **30.10.2024**
(21) Application number: 23726100.3
(22) Date of filing: 11.05.2023
(51) Int. Cl.: C11B 1/12, A23D 9/02, A23K 10/26, A23K 20/158, A23L 29/00, A23L 29/275

(54) **HYDROXYTYROSOL FOR PROCESSING ANIMAL BY-PRODUCTS**
HYDROXYTYROSOL ZUR VERARBEITUNG VON TIERISCHEN NEBENPRODUKTEN
HYDROXYTYROSOL POUR LE TRAITEMENT DE SOUS-PRODUITS ANIMAUX

(30) Priority: 12.05.2022 EP 22382460; 18.05.2022 EP 22382479
(43) Date of publication of application: 07.02.2024
(73) Proprietor: Industrial Técnica Pecuaria, S.A., 08011 Barcelona (ES)
(72) Inventor: ESTÉVEZ MEDINA, Javier, 08011 BARCELONA (ES); CARNÉ FRUCTUOSO, Sergi, 08011 BARCELONA (ES)
(74) Representative: ZBM Patents - Zea, Barlocci & Markvardsen
(86) International application number: PCT/EP2023/062583
(87) International publication number: WO 2023/198937

(56) References cited:
- EP-A1- 3 732 988
- EP-A1- 3 987 938
- WO-A2-2009/013596
- US-A1- 2012 202 778

## Description

This application claims the benefit of European Patent Applications EP22382460 filed on May 12th, 2022, and EP22382479 filed on May 18th, 2022.

### Technical Field

The present invention belongs to the field of methods for processing animal by-products.

The methods of the invention are particularly suitable for producing high quality animal meals with a high oxidative stability.

### Background Art

Methods for processing animal by-products into useful and more stable products, such as animal meals, are commonly known as rendering. Rendering processes generally involve the use of heat, moisture extraction, and fat separation. The obtained animal meals are very useful as ingredients in feed and food for production animals, aquaculture, fur animals, and pets, among others.

EP3 732 988 A1 discloses antioxidated fat-containing composition comprising an antioxidant combination of at least tocopherols, camosic acid and hydrolysable gallotannins.

The protein and lipid components contained in animal meat makes it highly susceptible to perishability and spoilage, mainly from the effects of oxygen due to deteriorative oxidation, in particular during heat treatments. One approach to reduce oxidation, particularly during rendering, is the incorporation of antioxidants.

The most common antioxidants used in rendering are synthetic molecules, namely butylhydroxytoluene (BHT) and butylated hydroxyanisole (BHA), essentially due to their lower cost in comparison with natural antioxidants. These lipophilic synthetic molecules protect the raw material during the rendering process and accumulate mainly in the separated fat fraction. However, since the transference of these antioxidants to the protein fraction is mostly insignificant, manufacturers are forced to add antioxidants again at the end of the process in order to obtain a stable animal meal.

Also, there is an increasing pressure in the market towards the use of natural compounds, thus, food manufacturers are turning to natural antioxidants, such as tocopherol-rich extracts. However, these are far more expensive than synthetic ones and often have varying efficacies, making it very difficult to implement them in a cost-effective manner. Also, like BHA and BHT, tocopherols are lipophilic and, if a remnant is still present after the process, where they are highly consumed, it accumulates in the fat, making it necessary to add antioxidants again at the end of the process to stabilize the protein meal. This, together with their higher costs, has hindered the use of natural antioxidants in rendering processes.

Therefore, in spite of the efforts made so far, there is still a need for rendering processes that generate safe animal meals with high oxidative stability in a cost-effective manner.

### Summary of Invention

The present invention provides an improved process for producing safe and high-quality animal meals and fats with a high oxidative stability.

After extensive research, the present inventors have surprisingly found that adding hydroxytyrosol to animal by-products before rendering not only protects both proteins and fats from oxidation, but also allows obtaining animal meals with an exceptionally high oxidative stability.

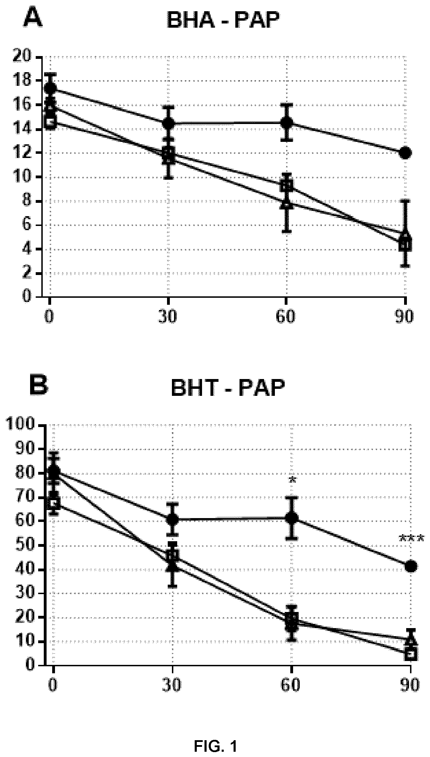

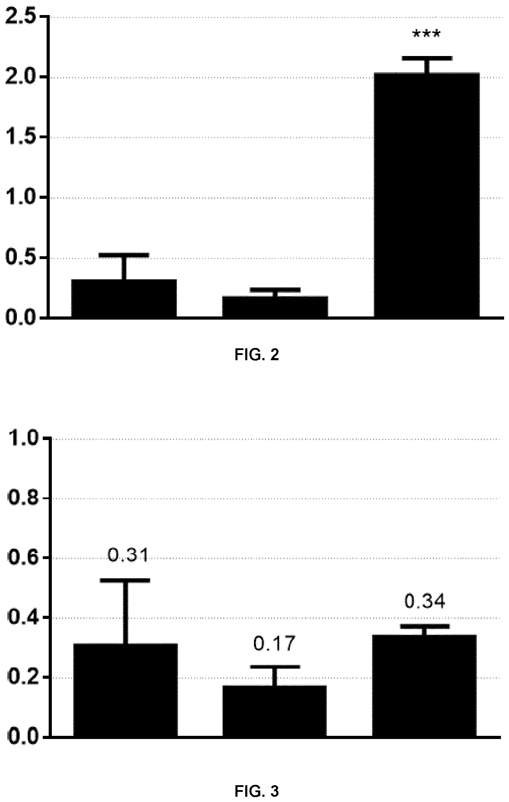

The results herein provided were highly unexpected in view of the physicochemical properties of hydroxytyrosol -it is an amphipathic compound (i.e., water soluble and fat soluble)- therefore, during rendering of animal by-products, hydroxytyrosol was expected to be washed away by water, transferred to the fat fraction, or consumed during the rendering process. Instead, the present inventors surprisingly found that the hydroxytyrosol added to the raw material was almost exclusively transferred during rendering to the protein fraction, thereby producing animal meals that contained exceptionally high levels of hydroxytyrosol, which even doubled the concentration in the raw material (see Figure 2, right column). This conferred the animal meals with a very high oxidative stability even after 90 days of storage (see Figure 1, circles versus squares). This effect was not achieved when BHA and BHT were added to the starting material (see Figure 1, triangles versus squares; and Figure 2, left and central column). Notably, other phenolic antioxidants with equivalent physicochemical properties to hydroxytyrosol, such as gallic acid, where not significantly transferred either to the protein fraction after rendering (see Figure 3, right column).

Thus, the process of the invention provides several advantages over the processes disclosed in the prior art. First, it avoids the use of synthetic antioxidants. Second, it produces animal meals and fats of high quality (i.e., not degraded). And third, it allows the obtention of animal meals highly enriched in antioxidants (i.e., with a very high oxidative stability), which reduces or even dispenses with the need to add further antioxidants to the animal meal. Thus, in the process of the invention, high quality animal meals can be obtained by adding a single antioxidant compound at the beginning of the rendering process.

Thus, in a first aspect, the invention provides a process for producing an animal meal comprising the steps of a) contacting an animal by-product comprising protein and fat with hydroxytyrosol; particularly at a concentration of at least 1 ppm; b) heating at a temperature from 50 °C to 250 °C until the fat contained in the animal by-product is melted; c) separating the melted fat from the animal by-product; and d) grinding the animal by-product thereby obtaining the animal meal.

In a second aspect, the invention provides animal meal obtainable by a process as defined in the first aspect; particularly wherein the animal meal is free or substantially free of fat.

In a third aspect, the invention provides fat obtainable by a process as defined in the first aspect; particularly wherein the fat is free or substantially free of any added antioxidant.

In a fourth aspect, the invention provides food, pet food, or animal feed comprising animal meal as defined in the second aspect or fat as defined in the third aspect.

### Brief Description of Drawings

Fig. 1 shows the levels of BHA (A) and BHT (B) at the indicated time points in the animal meal obtained by rendering raw material not treated with any antioxidant (squares), treated with BHA and BHT (triangles), treated with hydroxytyrosol (circles). The x-axis represents the time in days, and the y-axis represents de concentration of BHA or BHT in ppm. ***: P < 0.001 vs. other treatments; *: P < 0.05 vs. other treatments (ANOVA).
Fig. 2 shows the transference ratio of antioxidants from the raw material to the animal meal (i.e., concentration of the indicated antioxidant in the animal meal at time 0 / concentration of the indicated antioxidant in the raw material). The left column represents the transference ratio of BHT; the central column represents the transference ratio of BHA, and the right column represents the transference ratio of hydroxytyrosol. In the case of BHA and BHT, the concentration obtained in the negative control was subtracted, as this represented the BHA and BHT directly added to the protein meal. ***: P < 0,001 vs. BHA y BHT (ANOVA).
Fig. 3 shows the transference ratio of antioxidants from the raw material to the animal meal as described in Figure 2 above. The left column represents the transference ratio of BHT; the central column represents the transference ratio of BHA, and the right column represents the transference ratio of gallic acid. In the case of BHA and BHT the concentration obtained in the negative control was subtracted, as this represented the BHA and BHT directly added to the meat meal.

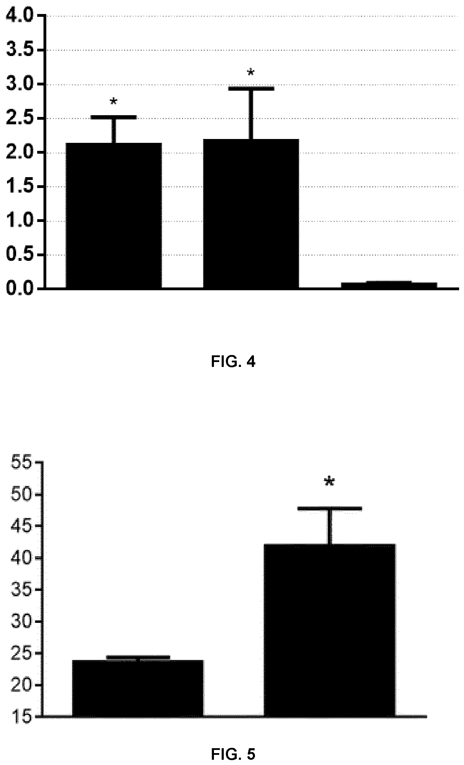

Fig. 4 shows the transference ratio of antioxidants from the raw material to the fat (i.e., concentration of the indicated antioxidant in the fat at time 0 / concentration of the indicated antioxidant in the raw material). The left column represents the transference ratio of BHT; the central column represents the transference ratio of BHA, and the right column represents the transference ratio of hydroxytyrosol. *: P < 0,05 vs. BHA and BHT (ANOVA).
Fig. 5 shows the induction period (in hours) obtained by Rancimat assay in fat samples from rendering process of pork raw material. The left column represents fat obtained from raw material not treated with antioxidants, and the right column represents fat obtained from raw material treated with hydroxytyrosol. N = 4-6; *: P<0.05.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As used herein, the indefinite articles "a" and "an" are synonymous with "at least one" or "one or more." Unless indicated otherwise, definite articles used herein, such as "the" also include the plural of the noun.

For purposes of the present invention, any ranges given include both the lower and the upper end-points of the range. Ranges given, such as concentrations and the like, should be considered approximate, unless specifically stated. The term "about" refers to a deviation of plus/minus 10 %, particularly plus/minus 5 %.

As used herein, "animal by-product" refers to the parts of animals that are not commonly used for human consumption, obtained, for instance, during the slaughter or meat-cutting process, for example, meat that does not meet aesthetic standards or internal organs. The term "animal", as used herein, refers to members of the kingdom animalia and specifically includes mammals, both land based and aquatic, fowl, fish, and crustaceans.

As used herein, "animal meal" refers to a protein-containing product or processed animal protein (PAP) suitable for human or animal consumption that is obtained from an animal by-product that has been subjected to a process that at least includes the steps of heating, fat separation, and grinding. Animal meals include, without limitation, meat meals, meat-and-bone meals, blood meals, viscera meals, feather meals, among others. Animal meals generally have a protein concentration that is higher, and a fat and water concentration that is lower, than those of the animal by-product from which they are produced, therefore they may also be referred to as "protein meals".

The term "substantially free of fat" refers to a product, particularly an animal meal, that comprises an amount of fat equal to or lower than 25 wt%, 24 wt%, 23 wt%, 22 wt%, 21 wt%, 20 wt%, 19 wt%,18 wt%, 17 wt%, 16 wt%, 15 wt%, 14 wt%, 13 wt%, 12 wt%, 11 wt%, or 10 wt%.

The term "substantially free of any added antioxidant" refers to a product, particularly a fat, that comprises an amount of added antioxidant equal to or lower than 5 ppm, 4.5 ppm, 4 ppm, 3.5 ppm, 3 ppm, 2.5 ppm, 2 ppm, 1.8 ppm, 1.6 ppm, 1.4 ppm, 1.2 ppm,1 ppm, 0.8 ppm, 0.6 ppm, 0.4 ppm, 0.2 ppm, 0.1 ppm, 0.01 ppm, 0.001 ppm, or 0.0001 ppm. "Added antioxidant" refers to an exogenous antioxidant, that is, an antioxidant not naturally present, particularly in the fat. Likewise, "substantially free of hydroxytyrosol" refers to a product, particularly a fat, that comprises an amount of hydroxytyrosol equal to or lower than 5 ppm, 4.5 ppm, 4 ppm, 3.5 ppm, 3 ppm, 2.5 ppm, 2 ppm, 1.8 ppm, 1.6 ppm, 1.4 ppm, 1.2 ppm, 1 ppm, 0.8 ppm, 0.6 ppm, 0.4 ppm, 0.2 ppm, 0.1 ppm, 0.01 ppm, 0.001 ppm, or 0.0001 ppm.

As used herein, the terms "wt%", "percentage by weight", "ppm" or "parts per million" of a component refers to the amount of the single component relative to the total weight of the composition or, if specifically mentioned, of another component.

Hydroxytyrosol is also known as 4-(2-hydroxyethyl)benzene-1,2-diol and has the CAS number 10597-60-1. Hydroxytyrosol has the formula (I):

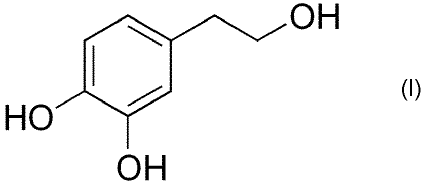

Hydroxytyrosol can be obtained from commercial sources.

The term "olive concentrate or extract" refers to a composition obtained from an olive or any part thereof which may comprise a greater concentration of certain components, particularly hydroxytyrosol, as compared to the parent source. The term "olive pulp concentrate or extract" refers to a composition obtained from an olive pulp which may comprise a greater concentration of certain components, particularly hydroxytyrosol, as compared to the parent source. The term "olive pulp" refers to the pomace obtained after subjecting olives (i.e., the fruit from a plant belonging to the genus *Olea,* particularly from *Olea europea*), to an olive oil extraction process, such as pressing process. An "olive pulp concentrate" may be referred to as "olive pulp fraction".

The term "comminution" refers to the reduction of solid materials, particular animal by-products, from one average particle size to a smaller average particle size, by crushing, grinding, cutting, vibrating, or other processes.

As indicated above, the present invention provides a process for producing an animal meal. The invention could also be formulated as a process for separating fat from animal by-products comprising protein and fat in order to obtain animal meal. The process of the invention comprises contacting animal by-products with hydroxytyrosol before subjecting the mixture to the heat treatment, fat separation process, and grinding. As shown in the examples below, the addition of hydroxytyrosol to the raw material not only protects the protein fraction and fat from oxidation during the processing, but also allows obtaining an animal meal with a very high oxidative stability.

In a particular embodiment of the process of the first aspect, optionally in combination with any of the embodiments provided above or below, the process comprises: a) contacting an animal by-product comprising protein and fat with hydroxytyrosol; b) heating the animal by-product contacted with hydroxytyrosol of a) at a temperature from 50 °C to 250 °C until the fat contained in the animal by-product is melted; c) separating the melted fat from the heated animal by-product of b); and d) grinding the animal by-product obtained in c) thereby obtaining the animal meal. Both the animal meal and the separated fat obtained in the process have a very high quality and are useful as ingredients in feed, pet food or food.

In a particular embodiment of the process of the first aspect, optionally in combination with any of the embodiments provided above or below, the process comprises: a) contacting an animal by-product comprising protein and fat with hydroxytyrosol; b) heating at a temperature from 50 °C to 250 °C until the fat contained in the animal by-product is melted and the moisture content is reduced; c) separating the melted fat from the animal by-product; and d) grinding the animal by-product thereby obtaining the animal meal.

In a particular embodiment of the process of the first aspect, optionally in combination with any of the embodiments provided above or below, the process consists of the steps a) contacting an animal by-product comprising protein and fat with hydroxytyrosol; b) heating at a temperature from 50 °C to 250 °C until the fat contained in the animal by-product is melted; c) separating the melted fat from the animal by-product; and d) grinding the animal by-product thereby obtaining the animal meal.

In a particular embodiment of the process of the first aspect, optionally in combination with any of the embodiments provided above or below, the process comprises the steps, in the following order, a) contacting an animal by-product comprising protein and fat with hydroxytyrosol; b) heating at a temperature from 50 °C to 250 °C until the fat contained in the animal by-product is melted; c) separating the melted fat from the animal by-product; and d) grinding the animal by-product thereby obtaining the animal meal.

In a particular embodiment of the process of the first aspect, optionally in combination with any of the embodiments provided above or below, step b) is carried out in a dry cooker, particularly in a dry continuous steam-jacketed cooker.

In a particular embodiment of the process of the first aspect, optionally in combination with any of the embodiments provided above or below, the animal by-product is meat by-product. In a more particular embodiment, the animal by-product comprises from 1 wt% to 99 wt%, from 2 wt% to 90 wt%, from 3 wt% to 80 wt%, from 4 wt% to 70 wt%, from 5 wt% to 50 wt%, from 10 wt% to 40 wt%, from 15 wt% to 45 wt%, from 20 wt% to 40 wt%, or from 25 wt% to 35 wt%, of fat. In a more particular embodiment, the animal by-product comprises from 15 wt% to 45 wt% or from 15 wt% to 25 wt% of fat.

In a particular embodiment of the process of the first aspect, optionally in combination with any of the embodiments provided above or below, the hydroxytyrosol is contacted in step a) at a concentration of at least 0.1 ppm, at least 0.2 ppm, at least 0.3 ppm, at least 0.4 ppm, at least 0.5 ppm, at least 0.6 ppm, at least 0.7 ppm, at least 0.8 ppm, at least 0.9 ppm, 1 ppm, at least 2 ppm, at least 3 ppm, at least 4 ppm, at least 5 ppm, at least 6 ppm, at least 7 ppm, or at least 8 ppm. In a more particular embodiment, the hydroxytyrosol is contacted in step a) at a concentration of about 8 ppm. This means that, for example, when hydroxytyrosol is contacted with an animal by-product at a concentration of 8 ppm, there are 8 parts of hydroxytyrosol per million parts of the mixture of hydroxytyrosol and the animal by-product.

In a particular embodiment of the process of the first aspect, optionally in combination with any of the embodiments provided above or below, the hydroxytyrosol is contacted in step a) at a concentration from 1 ppm to 300 ppm, from 2 ppm to 100 ppm, from 3 ppm to 50 ppm, from 4 ppm to 40 ppm, from 5 ppm to 30 ppm, from 6 ppm to 20 ppm, from 7 ppm to 20 ppm, or from 8 ppm to 16 ppm.

In a particular embodiment of the process of the first aspect, optionally in combination with any of the embodiments provided above or below, the step a) comprises mixing the hydroxytyrosol and the animal by-product, particularly until a homogeneous distribution of the hydroxytyrosol in the animal by-product is obtained.

In a particular embodiment of the process of the first aspect, optionally in combination with any of the embodiments provided above or below, the hydroxytyrosol is in the form of an olive concentrate or extract, particularly, an olive concentrate or extract comprising at least 0.01 wt%, at least 0.1 wt%, at least 0.2 wt%, at least 0.3 wt%, at least 0.4 wt%, at least 0.5 wt%, at least 0.6 wt%, at least 0.7 wt%, or at least 0.8 wt% of hydroxytyrosol.

In a more particular embodiment of the process of the first aspect, the hydroxytyrosol is in the form of an olive pulp concentrate or extract, particularly, an olive pulp concentrate or extract comprising at least 0.01 wt%, at least 0.1 wt%, at least 0.2 wt%, at least 0.3 wt%, at least 0.4 wt%, at least 0.5 wt%, at least 0.6 wt%, at least 0.7 wt%, or at least 0.8 wt% of hydroxytyrosol. In an even more particular embodiment, the hydroxytyrosol is in the form of an aqueous olive pulp concentrate or extract, particularly, an aqueous olive pulp concentrate or extract comprising at least 0.01 wt%, at least 0.1 wt%, at least 0.2 wt%, at least 0.3 wt%, at least 0.4 wt%, at least 0.5 wt%, at least 0.6 wt%, at least 0.7 wt%, or at least 0.8 wt% of hydroxytyrosol.

In a particular embodiment of the process of the first aspect, optionally in combination with any of the embodiments provided above or below, the hydroxytyrosol is in the form of an olive concentrate or extract, particularly, an olive concentrate or extract comprising hydroxytyrosol at a concentration from 0.01 wt% to 20 wt%, from 0.1 wt% to 10 wt%, from 0.5 wt% to 5 wt%, or about 0.8 wt%. In a more particular embodiment, the hydroxytyrosol is in the form of an olive pulp concentrate or extract, particularly, an olive pulp concentrate or extract comprising hydroxytyrosol at a concentration from 0.01 wt% to 20 wt%, from 0.1 wt% to 10 wt%, from 0.5 wt% to 5 wt%, or about 0.8 wt%. In an even more particular embodiment, the hydroxytyrosol is in the form of an aqueous olive pulp concentrate or extract, particularly an aqueous olive pulp concentrate or extract comprising hydroxytyrosol at a concentration from 0.01 wt% to 20 wt%, from 0.1 wt% to 10 wt%, from 0.5 wt% to 5 wt%, or about 0.8 wt%. Olive and olive pulp concentrates or extracts containing hydroxytyrosol can be obtained commercially or produced by routine methods known to the skilled in the art.

In a particular embodiment of the process of the first aspect, optionally in combination with any of the embodiments provided above or below, the animal by-product is comminuted before contacting with the hydroxytyrosol. In another particular embodiment of the process of the first aspect, the animal by-product is comminuted after contacting with the hydroxytyrosol and before heating. In a more particular embodiment, the animal by-product is comminuted before heating and before or after contacting with the hydroxytyrosol by a method selected from the group consisting of crushing, grinding, cutting, vibrating, and combinations thereof. In another particular embodiment of the process of the first aspect, the process further comprises the step a') comminuting the animal by-product. The skilled in the art knows how to adjust the conditions for comminution depending on the characteristics of the animal by-product, such as its bone content, fat content, etc., without exercising any inventive skill.

In a particular embodiment of the process of the first aspect, optionally in combination with any of the embodiments provided above or below, step b) is performed at a temperature from 50 °C to 250 °C, from 60 °C to 220 °C, from 70 °C to 200 °C, from 75 °C to 190 °C, from 80 °C to 170 °C, from 85 °C to 145 °C, from 90 °C to 140 °C, from 95 °C to 135 °C, or from 120 °C to 130 °C, particularly, at about 135 °C. More particularly, it is performed at a temperature from 130 °C to 140 °C.

The skilled in the art would know how to adjust the temperature and time of the step b) in view of the characteristics of the animal by-product used without applying any inventive skill, and he or she would know, for example by visual inspection, when the fat contained in the animal by-product is melted. In a more particular embodiment of the process of the first aspect, optionally in combination with any of the embodiments provided above or below, step b) is performed for at least 5 min, at least 10 min, at least 15 min, at least 20 min, at least 25 min, at least 30 min, at least 40 min, at least 50 min, at least 60 min, at least 2 h, at least 3 h. In a more particular embodiment, step b) is performed for period of time from 5 min to 10 h, from 10 min to 9 h, from 15 min to 8 h, from 20 min to 7 h, from 25 min to 6 h, from 30 min to 5 h, from 40 min to 4 h, from 50 min to 3 h, or from 60 min to 2h. In an even more particular embodiment, step b) is performed for about 25 min.

The methods for separating the melted fat from the heated animal by-product are well known to the skilled person. These conditions may be, for instance, the conditions disclosed in the Example section below. Thus, in a particular embodiment of the process of the first aspect, optionally in combination with any of the embodiments provided above or below, separating the melted fat in step c) comprises decanting and/or pressing, particularly with a screw press. In a more particular embodiment, separating the melted fat in step c) comprises decanting followed by pressing, particularly with a screw press. In a more particular embodiment, separating the melted fat in step c) comprises pressing, particularly with a screw press.

In a particular embodiment of the process of the first aspect, optionally in combination with any of the embodiments provided above or below, the steps b) and c) are carried out simultaneously or sequentially.

In a particular embodiment of the process of the first aspect, optionally in combination with any of the embodiments provided above or below, step b) comprises heating at a temperature from 50 °C to 250 °C until the fat contained in the animal meat or meat by-product is melted and the moisture content of the animal by-product is reduced. The moisture content may be reduced by simple evaporation. Thus, the heating step may serve at least two purposes: reducing the fat content and reducing the water content from the animal by-product.

In a particular embodiment of the process of the first aspect, optionally in combination with any of the embodiments provided above or below, in step b) the moisture content of the animal by-product is reduced by 10%, by 20%, by 30%, by 40%, by 50%, by 60%, by 70%, by 80%, by 90%, by or 99%.

In a particular embodiment of the process of the first aspect, optionally in combination with any of the embodiments provided above or below, step b) comprises separating the melted fat from the animal by-product wherein the resulting product has fat content equal to or lower than 18 wt%, 17 wt%, 16 wt%, 15 wt%, 14 wt%, 13 wt%, 12 wt%, 11 wt%, or 10 wt%.

In a particular embodiment of the process of the first aspect, optionally in combination with any of the embodiments provided above or below, the animal meal produced is substantially free of fat.

In a particular embodiment of the process of the first aspect, optionally in combination with any of the embodiments provided above or below, the animal meal obtained in step d) comprises hydroxytyrosol, particularly at a concentration of at least 1 ppm, at least 2 ppm, at least 3 ppm, at least 4 ppm, at least 5 ppm, at least 6 ppm, at least 7 ppm, at least 8 ppm, at least 9 ppm, at least 10 ppm, at least 11 ppm, at least 12 ppm, at least 13 ppm, at least 14 ppm, at least 15 ppm, or at least 16 ppm. In a more particular embodiment, the animal meal obtained in step d) comprises hydroxytyrosol at a concentration from 1 ppm to 300 ppm, from 3 ppm to 100 ppm, from 6 ppm to 50 ppm, from 9 ppm to 40 ppm, from 12 ppm to 30 ppm, from 13 ppm to 20 ppm, from 14 ppm to 20 ppm, or from 15 ppm to 17 ppm. In an even more particular embodiment, the animal meal comprises hydroxytyrosol at a concentration at about 16 ppm.

In a particular embodiment of the process of the first aspect, optionally in combination with any of the embodiments provided above or below, the step d) comprises grinding the dried and defatted animal by-product thereby obtaining the animal meal. Any method known in the art to grind the animal by-product in step d) can be applied by the skilled person in the method of the invention in order to produce the animal meal after the heat treatment and fat separation. For example, the methods disclosed in the Example section below. The skilled in the art knows how to adjust the conditions for grinding conditions depending on the characteristics of the animal by-product, such as its bone content, fat content, etc., without exercising any inventive skill.

In a particular embodiment of the process of the first aspect, optionally in combination with any of the embodiments provided above or below, the process further comprises the step c") reducing the moisture content from the fat separated in step c).

In a particular embodiment of the process of the first aspect, optionally in combination with any of the embodiments provided above or below, the animal is selected from the group consisting of pork, poultry, beef, small ruminants, fish, and combinations thereof.

As above disclosed, the invention provides in a second aspect animal meal obtainable by a process as defined in the first aspect.

The animal meal "obtainable by" the process as defined above is used herein to define the animal meal by its preparation process and relates to the animal meal obtainable by the preparation process which comprises the steps a), b), and c) described above. For the purposes of the invention, the expressions "obtainable", "obtained" and equivalent expressions are interchangeably used, and in any case the expression "obtainable" includes the expression "obtained".

In a particular embodiment of the second aspect, optionally in combination with any of the embodiments provided above or below, the animal meal comprises proteins and/or is free or substantially free of fat. In a more particular embodiment, the animal meal has fat content equal to or lower than 25 wt%, 24 wt%, 23 wt%, 22 wt%, 21 wt%, 20 wt%, 19 wt%, 18 wt%, 17 wt%, 16 wt%, 15 wt%, 14 wt%, 13 wt%, 12 wt%, 11 wt%, or 10 wt%.

In a particular embodiment of the second aspect, optionally in combination with any of the embodiments provided above or below, the animal meal comprises hydroxytyrosol at a concentration of at least 1 ppm, at least 2 ppm, at least 3 ppm, at least 4 ppm, at least 5 ppm, at least 6 ppm, at least 7 ppm, at least 8 ppm, at least 9 ppm, at least 10 ppm, at least 11 ppm, at least 12 ppm, at least 13 ppm, at least 14 ppm, at least 15 ppm, or at least 16 ppm. In a more particular embodiment, the animal meal comprises hydroxytyrosol at a concentration from 1 ppm to 300 ppm, from 3 ppm to 100 ppm, from 6 ppm to 50 ppm, from 9 ppm to 40 ppm, from 12 ppm to 30 ppm, from 13 ppm to 20 ppm, from 14 ppm to 20 ppm, or from 15 ppm to 17 ppm. In an even more particular embodiment, the animal meal comprises hydroxytyrosol at a concentration at about 16 ppm.

In a particular embodiment of the second aspect, optionally in combination with any of the embodiments provided above or below, the animal meal does not contain any added antioxidant different from hydroxytyrosol, particularly the animal meal does not contain any synthetic antioxidant.

As above disclosed, the invention provides in a third aspect fat obtainable by a process as defined in the first aspect. The fat from this aspect refers to the fat separated in step c) of the process of the first aspect. Advantageously, as shown in the examples below, the fat obtainable by the process of this aspect is stable (i.e., unoxidized) but free of any added (i.e., exogenous) antioxidants. That is, although the HT added before rendering is not substantially transferred to the fat, it provides a high oxidative protection to the fat throughout the rendering process.

In a particular embodiment of the third aspect, optionally in combination with any of the embodiments provided above or below, the fat is free or substantially free of any added antioxidant. In a more particular embodiment, the fat is free or substantially free of hydroxytyrosol. In another particular embodiment, the fat is free or substantially free of any synthetic antioxidant.

In another particular embodiment of the third aspect, optionally in combination with any of the embodiments provided above or below, the fat does not contain any synthetic antioxidant.

In another particular embodiment of the third aspect, the fat is unoxidized or substantially unoxidized. In a more particular embodiment, the fat has a peroxide value (PV) equal to or lower than 12 mEqO/Kg, 11 mEqO/Kg, 10 mEqO/Kg, 9 mEqO/Kg, 8 mEqO/Kg, 7 mEqO/Kg, 6 mEqO/Kg, 5 mEqO/Kg, 4 mEqO/Kg, 3 mEqO/Kg, or 2 mEqO/Kg, optionally measured by the AOCS Official Method Cd 8-53 with indirect REDOX assessment with authomatic titration.

In a further embodiment, the fat is free or substantially free of any added antioxidant and is unoxidized or substantially unoxidized. In a more particular embodiment, the fat is free or substantially free of any added antioxidant and has a peroxide value (PV) equal to or lower than 12 mEqO/Kg, 11 mEqO/Kg, 10 mEqO/Kg, 9 mEqO/Kg, 8 mEqO/Kg, 7 mEqO/Kg, 6 mEqO/Kg, 5 mEqO/Kg, 4 mEqO/Kg, 3 mEqO/Kg, or 2 mEqO/Kg, optionally measured by the AOCS Official Method Cd 8-53 with indirect REDOX assessment with authomatic titration.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### Examples

### Rendering process

A rendering process was carried out in a dry continuous 1800US cooker system to test the protective effect of different antioxidants on pork by-products obtained from a slaughterhouse. The by-products included pork adipose tissues with and without pigskin, meat scraps from trimmings, and bones. The raw materials were conveyed to a grinder in order to reduce particle size to improve heat transfer in the subsequent phase of the process. After grinding, the following antioxidants were applied to the ground raw material:
- Aqueous olive pulp fraction (i.e., olive pulp concentrate) (containing 0,8 % hydroxytyrosol) to a final concentration of 1200 ppm (i.e., 8 ppm hydroxytyrosol final concentration);
- A combination of BHT (butylhydroxytoluene) and BHA (butylated hydroxyanisole) to a final concentration of 40 ppm (BHT) and 8 ppm (BHA); or
- Gallic acid in aqueous solution to final concentration of 60 ppm.

Then, the ground raw material containing the antioxidant was conveyed at a specific rate to the continuous agitated and steam-jacketed cooker, heated by boiler steam. The material was cooked at 135 °C during 90 min to evaporate water and to release the fat from raw material. The product obtained was transported to a separator where solids and liquid fats were separated.

Solids were transported to the screw press where a solids cake was obtained and where the remaining fat was separated. 60 g/t of BHT (i.e., 60 ppm) and 12 g/t of BHA (i.e., 12 ppm) were sprayed to the cake in all the treatments. The pressed cake was cooled and grinded, thereby obtaining an animal meal (i.e., a protein meal).

The antioxidant concentration in the animal meal was analyzed by Liquid chromatography coupled to triple quadrupole mass spectrometry (LC-MS-MS) at the indicated time points.

### Aqueous olive pulp fraction

The hydroxytyrosol-containing aqueous olive pulp fraction used in the examples was obtained by standard methods. Briefly, the pulp obtained after subjecting olives to an olive oil extraction process was dehydrated and fermented. The supernatant was then separated by centrifugation and filtration. The resulting aqueous solution was evaporated until the concentration of hydroxytyrosol contained was of 0.8 wt%.

### Rancimat method

Rancimat assays were performed with 892 Professional Rancimat according to manufacturer's instructions (Metrohm, Switzerland), in order to test the oxidative state of the fats obtained in the rendering process.

The temperature of the heating block was fixed at 100 °C. When the device arrived at the desired temperature, 60 mL of deionized water was added to each cell and its conductivity was determined until it was stable (1.5 - 2 h). 3g of fat obtained in the rendering processes was melt in a heater at 50°C. 3 The samples were exposed to a stream of air at 100°C. Volatile oxidation products (mainly formic acid) are transferred to the measuring vessel by the air stream and absorbed there in distilled water, where water conductivity was determined. Water conductivity, mostly originated by the increase of formic acid and other secondary products of oxidation, was recorded by a software installed in a computer, continuously against time, thereby obtaining an oxidation curve whose inflection point is the induction period. This induction period is the time required for the oxidation process to change character from a state of very slow oxidation to much faster consumption of oxygen, causing a rapid increase in the peroxide value.

### Results

In order to test the oxidative stability of animal meals produced from animal by-products (i.e., the raw materials) treated with different antioxidants, the animal by-products were either left untreated, treated with a combination of BHT and BHA, or treated with hydroxytyrosol, at the concentrations above indicated.

The animal by-products were then subjected to rendering processing as above described and, in all cases, the animal meal obtained was then treated with a combination of BHT and BHA, and the concentration of BHT a BHA was measured over time as a proxy to measure oxidative stability.

As shown in Figure 1 A and B, the levels of BHT and BHA measured at different time points showed that animal meals obtained from raw materials treated with hydroxytyrosol presented a higher oxidative stability over time, as evidenced by higher levels of BHT and BHA at 30, 60, and 90 days (Figure 1 A and B, circles).

Untreated raw materials (Figure 1 A and B, squares), or raw materials treated with BHT and BHA (Figure 1 A and B, triangles), produced animal meals where the levels of BHA drastically dropped after day 60.

The addition of the hydroxytyrosol to the raw material surprisingly provided animal meals where BHA levels remained much more stable and even without consumption between days 30 and 60. At day 90, the remaining BHA in the treatment with hydroxytyrosol was more than twice that detected in the negative control (Figure 1, circles versus squares) and in the meal derived from raw material with synthetic antioxidants (Figure 1, circles versus triangles).

BHT showed a trend similar to that observed for BHA. In fact, the results at day 60 in the animal meal obtained from the hydroxytyrosol-treated raw material were three times higher than those found in the negative control and in the case of synthetic antioxidants, and 4 times higher at day 90, being statistically significant in both cases (ANOVA; p < 0.05).

These results indicate a greater oxidative stability of the animal meals rendered from raw materials stabilized with hydroxytyrosol.

Note that at time 0, there were no differences in the levels of BHA and BHT in the three experimental groups (Figure 1 A and B). This indicates that the concentration of BHT and BHA only depended on the direct addition of these antioxidants to the animal meal and that there was no significant transfer of synthetic antioxidants (BHA and BHT) from the raw material to the animal meal. On the contrary, when the levels of hydroxytyrosol were measured in the animal meal obtained from hydroxytyrosol-treated raw material, a concentration of 16 ppm was detected, which doubled that of the raw material (8ppm). Therefore, an unexpected high transfer and concentration of hydroxytyrosol was observed in the animal meal (Figure 2, right column), a behavior not observed before with other antioxidants, in particular with BHT or BHA (Figure 2, left and central column, respectively).

Notably, this transference was not observed when the raw material was treated with another phenolic antioxidant very similar in structure and physicochemical properties to hydroxytyrosol, namely gallic acid. As shown in Figure 3, gallic acid presented a transference ratio from the raw material to the animal meal below 0.4 (Figure 3, right column), in the same range as BHT and BHA (Figure 3, left and central column, respectively).

This superior antioxidant transfer in the case of hydroxytyrosol is consistent with the higher oxidative stability of animal meals obtained from hydroxytyrosol-treated raw material (see Figure 1). Therefore, the addition of hydroxytyrosol to the raw material not only protects the raw material (both proteins and fats) from oxidation during the rendering process, but also confers significantly greater antioxidant protection to the animal meal than when synthetic antioxidants, or other phenolic antioxidants such as gallic acid, are used. This transfer and concentration of hydroxytyrosol from the raw material to the animal meal makes it possible to reduce or even dispense with the need to add further antioxidants to the animal meal subsequent to the rendering process, which is a clear advantage as it reduces costs and optimizes the meal production process. Similar results were obtained with shorter heating times, in particular when the material was cooked at 135 °C during 25 min.

Finally, the antioxidant levels in the fat fraction obtained in the rendering process were analyzed. Unlike what usually occurs in the case of antioxidants currently marketed for rendering, hydroxytyrosol did not concentrate in the fat, obtaining practically undetectable antioxidant remnants (see Figure 4, right column). Thus, its transfer ratio to fat was significantly lower than that of BHT and BHA (see Figure 4, left and central columns, respectively).

Unexpectedly, as shown in Figure 5, it was found that this lower transfer of hydroxytyrosol to fat did not have a negative impact on fat stability, as measured by the Rancimat method. Without wishing to be bound by theory, this effect was probably due to the higher protection provided by the hydroxytyrosol during the rendering process. In addition, not detecting any remaining antioxidant in the fat also represents an interesting advantage for rendering companies that need to market fats without antioxidants or synthetic antioxidants.

In sum, these results demonstrate that adding hydroxytyrosol before rendering allows obtaining animal meals and fats of very high quality. Moreover, the well-known high thermostability of hydroxytyrosol -it is known to resist temperatures up to at least 250 °C- allows its application in a wide array of rendering systems, where the temperatures applied can range from 50 °C to 250 °C.

## Claims

1. A process for producing an animal meal comprising the steps of:
a) contacting an animal by-product comprising protein and fat, with hydroxytyrosol at a concentration of at least 1 ppm;
b) heating at a temperature from 50 °C to 250 °C until the fat contained in the animal by-product is melted;
c) separating the melted fat from the animal by-product; and
d) grinding the animal by-product thereby obtaining the animal meal.

2. The process according to claim 1, wherein the hydroxytyrosol is contacted in step a) at a concentration of at least 8 ppm.

3. The process according to any of claims 1-2, wherein the hydroxytyrosol is in the form of an olive concentrate or extract, particularly an olive pulp concentrate or extract.

4. The process according to claim 3, wherein the olive pulp concentrate or extract comprises at least 0.1 wt% hydroxytyrosol, particularly at least 0.5 wt% hydroxytyrosol.

5. The process according to any of claims 1-4, wherein step b) is performed at a temperature from 90 °C to 150 °C, particularly from 130 °C to 140 °C.

6. The process according to any of claims 1-5, wherein step b) is performed for at least 5 min, particularly for at least 15 min.

7. The process according to any of claims 1-6, wherein separating the melted fat in step c) comprises pressing, particularly with a screw press.

8. The process according to any of claims 1-7, wherein the animal by-product comprises from 1 wt% to 99 wt% of fat, particularly from 15 wt% to 45 wt% of fat.

9. The process according to any of claims 1-8, wherein the animal by-product is comminuted before contacting with the hydroxytyrosol in step a).

10. The process according to any of claims 1-9, wherein step b) comprises heating at a temperature from 50 °C to 250 °C until the fat contained in the animal by-product is melted and the moisture content of animal by-product is reduced.

11. The process according to any of claims 1-10 further comprising the step c") reducing the moisture content of the fat separated in step c).

12. Animal meal obtainable by a process as defined in any of claims 1-11, wherein the animal meal is free or substantially free of fat, wherein animal meal substantially free of fat means animal meal that comprises an amount of fat equal to or lower than 25 wt%.

13. The animal meal according to claim 12, which comprises hydroxytyrosol at a concentration of at least 1 ppm, particularly of at least 8 ppm.

14. Fat obtainable by a process as defined in any of claims 1-11, wherein the fat is free or substantially free of any added antioxidant, wherein fat substantially free of any added antioxidant means fat that comprises an amount of added antioxidant equal to or lower than 5 ppm.

15. Food, pet food, or animal feed comprising animal meal as defined in any of claims 12-13 or fat as defined in claim 14.

## Patentansprüche

1. Ein Verfahren zur Herstellung eines Tiermehls, umfassend die folgenden Schritte:
a) In-Kontakt-bringen eines tierischen Nebenprodukts umfassend Protein und Fett, mit Hydroxytyrosol in einer Konzentration von mindestens 1 ppm;
b) Erhitzen auf eine Temperatur von 50 °C bis 250 °C, bis das in dem tierischen Nebenprodukt enthaltene Fett geschmolzen ist;
c) Trennen des geschmolzenen Fetts von dem tierischen Nebenprodukt; und
d) Mahlen des tierischen Nebenprodukts, wodurch das Tiermehl erhalten wird.

2. Das Verfahren nach Anspruch 1, wobei das Hydroxytyrosol in Schritt a) in einer Konzentration von mindestens 8 ppm in Kontakt gebracht wird.

3. Das Verfahren nach einem der Ansprüche 1 bis 2, wobei das Hydroxytyrosol in Form eines Olivenkonzentrats oder -extrakts, insbesondere eines Olivenmarkkonzentrats oder - extrakts, vorliegt.

4. Das Verfahren nach Anspruch 3, wobei das Olivenmarkkonzentrat oder -extrakt mindestens 0,1 Gew.-% Hydroxytyrosol, insbesondere mindestens 0,5 Gew.-% Hydroxytyrosol umfasst.

5. Das Verfahren nach einem der Ansprüche 1 bis 4, wobei der Schritt b) bei einer Temperatur von 90 °C bis 150 °C, insbesondere von 130 °C bis 140 °C, durchgeführt wird.

6. Das Verfahren nach einem der Ansprüche 1 bis 5, wobei der Schritt b) für mindestens 5 min, insbesondere für mindestens 15 min, durchgeführt wird.

7. Das Verfahren nach einem der Ansprüche 1 bis 6, wobei das Abtrennen des geschmolzenen Fetts in Schritt c) das Pressen, insbesondere mit einer Schneckenpresse, umfasst.

8. Das Verfahren nach einem der Ansprüche 1 bis 7, wobei das tierische Nebenprodukt von 1 Gew.-% bis 99 Gew.-% Fett, insbesondere von 15 Gew.-% bis 45 Gew.-% Fett, umfasst.

9. Das Verfahren nach einem der Ansprüche 1 bis 8, wobei das tierische Nebenprodukt zerkleinert wird, bevor es mit dem Hydroxytyrosol in Schritt a) in Kontakt gebracht wird.

10. Das Verfahren nach einem der Ansprüche 1 bis 9, wobei der Schritt b) das Erhitzen auf eine Temperatur von 50 °C bis 250 °C umfasst, bis das in dem tierischen Nebenprodukt enthaltene Fett geschmolzen ist und der Feuchtigkeitsgehalt des tierischen Nebenprodukts reduziert ist.

11. Das Verfahren nach einem der Ansprüche 1 bis 10, ferner umfassend den Schritt c") Reduzieren des Feuchtigkeitsgehalts des in Schritt c) abgetrennten Fetts.

12. Tiermehl, das durch ein Verfahren wie in einem der Ansprüche 1 bis 11 definiert erhalten werden kann, wobei das Tiermehl frei oder im Wesentlichen frei von Fett ist, wobei Tiermehl, das im Wesentlichen frei von Fett ist, Tiermehl bedeutet, das eine Menge an Fett von 25 Gew.-% oder weniger umfasst.

13. Das Tiermehl nach Anspruch 12, welches Hydroxytyrosol in einer Konzentration von mindestens 1 ppm, insbesondere von mindestens 8 ppm, umfasst.

14. Fett, das durch ein Verfahren wie in einem der Ansprüche 1 bis 11 definiert erhalten werden kann, wobei das Fett frei oder im Wesentlichen frei von jedwedem zugesetzten Antioxidans ist, wobei Fett, das im Wesentlichen frei von jedwedem zugesetzten Antioxidans ist, ein Fett bedeutet, das eine Menge an zugesetztem Antioxidans von 5 ppm oder weniger umfasst.

15. Lebensmittel, Haustierfutter oder Tierfutter umfassend Tiermehl wie in einem der Ansprüche 12 bis 13 definiert oder Fett wie in Anspruch 14 definiert.

## Revendications

1. Un procédé de production d'une farine animale comprenant les étapes consistant à :
a) mettre en contact un sous-produit animal comprenant de la protéine et de la graisse, avec de l'hydroxytyrosol à une concentration d'au moins 1 ppm ;
b) chauffer à une température de 50 °C à 250 °C jusqu'à ce que la graisse contenue dans le sous-produit animal soit fondue ;
c) séparer la graisse fondue du sous-produit animal ; et
d) broyer le sous-produit animal, obtenant ainsi la farine animale.

2. Le procédé selon la revendication 1, dans lequel l'hydroxytyrosol est mis en contact dans l'étape a) à une concentration d'au moins 8 ppm.

3. Le procédé selon l'une quelconque des revendications 1 à 2, dans lequel l'hydroxytyrosol est sous la forme d'un concentré ou d'un extrait d'olive, en particulier d'un concentré ou d'un extrait de pulpe d'olive.

4. Le procédé selon la revendication 3, dans lequel le concentré ou l'extrait de pulpe d'olive comprend au moins 0,1 % en poids d'hydroxytyrosol, en particulier au moins 0,5 % en poids d'hydroxytyrosol.

5. Le procédé selon l'une quelconque des revendications 1 à 4, dans lequel l'étape b) est effectuée à une température de 90 °C à 150 °C, en particulier de 130 °C à 140 °C.

6. Le procédé selon l'une quelconque des revendications 1 à 5, dans lequel l'étape b) est effectuée pendant au moins 5 min, en particulier pendant au moins 15 min.

7. Le procédé selon l'une quelconque des revendications 1 à 6, dans lequel la séparation de la graisse fondue dans l'étape c) comprend le pressage, en particulier avec une presse à vis.

8. Le procédé selon l'une quelconque des revendications 1 à 7, dans lequel le sous-produit animal comprend de 1 % en poids à 99 % en poids de graisse, en particulier de 15 % en poids à 45 % en poids de graisse.

9. Le procédé selon l'une quelconque des revendications 1 à 8, dans lequel le sous-produit animal est concassé avant d'être mis en contact avec l'hydroxytyrosol dans l'étape a).

10. Le procédé selon l'une quelconque des revendications 1 à 9, dans lequel l'étape b) comprend le chauffage à une température de 50 °C à 250 °C jusqu'à ce que la graisse contenue dans le sous-produit animal soit fondue et que la teneur en humidité du sous-produit animal soit réduite.

11. Le procédé selon l'une quelconque des revendications 1 à 10, comprenant en outre l'étape c") réduction de la teneur en humidité de la graisse séparée dans l'étape c).

12. Une farine animale pouvant être obtenue par un procédé tel que défini dans l'une quelconque des revendications 1 à 11, dans laquelle la farine animale est exempte ou sensiblement exempte de graisse, dans laquelle la farine animale sensiblement exempte de graisse signifie de la farine animale qui comprend une quantité de graisse égale ou inférieure à 25 % en poids.

13. La farine animale selon la revendication 12, qui comprend de l'hydroxytyrosol à une concentration d'au moins 1 ppm, en particulier d'au moins 8 ppm.

14. Une graisse pouvant être obtenue par un procédé tel que défini dans l'une quelconque des revendications 1 à 11, dans laquelle la graisse est exempte ou sensiblement exempte de tout antioxydant ajouté, dans laquelle la graisse sensiblement exempte de tout antioxydant ajouté signifie de la graisse qui comprend une quantité d'antioxydant ajouté égale ou inférieure à 5 ppm.

15. Un aliment, un aliment pour animaux de compagnie ou un aliment pour animaux comprenant de la farine animale telle que définie dans l'une quelconque des revendications 12 à 13 ou de la graisse telle que définie dans la revendication 14.
